(19) Europäisches Patentamt
European Patent Office
Office européen des brevets

(11) Veröffentlichungsnummer: **0 081 737**
**B1**

# (12) EUROPÄISCHE PATENTSCHRIFT

(45) Veröffentlichungstag der Patentschrift: **11.06.86**

(51) Int. Cl.⁴: **C 09 B 62/028**, C 09 B 67/26, D 06 P 1/382, D 21 H 3/82

(21) Anmeldenummer: **82111053.3**

(22) Anmeldetag: **30.11.82**

## (54) Flüssigkristalline Phase eines Azoreaktivfarbstoffs und deren Verwendung zum Färben und Bedrucken von natürlichen und synthetischen Substraten.

(30) Priorität: **11.12.81 DE 3149129**

(43) Veröffentlichungstag der Anmeldung: **22.06.83 Patentblatt 83/25**

(45) Bekanntmachung des Hinweises auf die Patenterteilung: **11.06.86 Patentblatt 86/24**

(84) Benannte Vertragsstaaten: **CH DE GB LI**

(56) Entgegenhaltungen:
**EP-A-0 029 959**
**DE-A-2 906 191**
**FR-A-2 436 166**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Wolff, Joachim, Dr., Neuenhauserweg 6, D-5060 Bergisch-Gladbach 2 (DE)**
Erfinder: **Wolf, Karlheinz, Dr., Paul Klee Strasse 77, D-5090 Leverkusen (DE)**
Erfinder: **Koll, Jochen, Am Telegraf 40, D-5068 Odenthal 3 (DE)**
Erfinder: **Hörnle, Reinhold, Dr., Hufelandstrasse 42, D-5000 Köln 80 (DE)**
Erfinder: **Mölls, Hans-Heinz, Dr., Max Beckmann Strasse 29, D-5090 Leverkussen 1 (DE)**
Erfinder: **Paulat, Volker, Dr., Menzelweg 1, D-4019 Monheim (DE)**

EP 0 081 737 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft die lyotrope flüssigkristalline, wäßrige Phase eines in Wasser bei Raumtemperatur in einer Konzentration von 10 - 25 % vorliegenden Reaktivfarbstoffs der Formel:

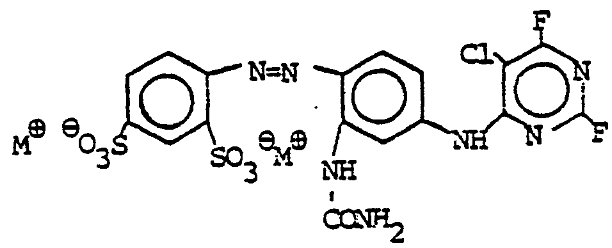

I ([illegible])

oder der Formel

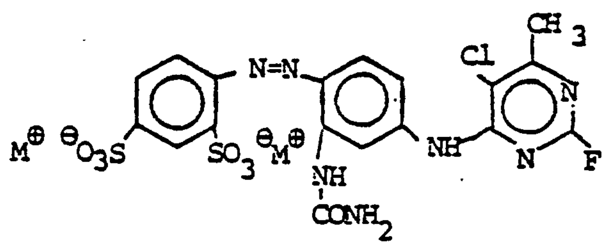

II ([illegible])

worin M⊕ für H⊕ oder ein Alkalimetallkation (vorzugsweise Na⊕, K⊕ und Li⊕) steht

gegebenenfalls in Gegenwart von konzentrationserhöhenden Zusatzstoffen und/oder Puffersubstanzen. Sie eignen sich in hervorragender Weise für die Herstellung von Färbebädern und Druckpasten für die Anwendung auf natürlichen und synthetischen Substraten, insbesondere Baumwolle, Wolle, Regeneratcellulose, Papier und Leder. Diese Phase zeigt die für flüssige Kristalle charakteristische Doppelbrechung und Bildung eines strukturierten Beugungsbildes bei der Röntgenkleinwinkelbeugung.

Die Charakterisierung dieser lyotropen flüssigen Kristalle erfolgt, wie üblich, durch die infolge der Doppelbrechung sich ausbildenden Interferenzfarben beim Einbringen dieser flüssigen Kristalle zwischen gekreuzte Nicols eines Polarisationsmikroskopes und/oder durch das strukturierte Beugungsbild bei der Röntgenkleinwinkelbeugung mit Cu-K $\alpha$,-Strahlung in einer Kießig-Kammer (vgl. z.B. G.H.Brown: Flüssige Kristalle; Chem. uns. Zeit, 2, 1968, S. 43 - 51 und Eckert und Kramer: Pharmazie uns. Zeit 1, 1972,S.116 - 121).

Die erfindungsgemäßen lyotropen, flüssigkristallinen wäßrigen Phasen von diesen Farbstoffen werden erhalten, indem der entsprechende Reaktivfarbstoff in trockener oder feuchter Form, beispielsweise als feuchter Preßkuchen, oder auch als salzarmes Konzentrat bzw. als Mischungen dieser Formen in wäßrige Lösung, zusammengesetzt aus ein oder mehreren konzentrationserhöhenden Zusatzstoffen und Puffer, bei leicht erhöhter Temperatur eingetragen und verrührt wird. Nach kurzer Zeit geht der Farbstoff in diesem Medium in eine lyotrope flüssigkristalline Form über.

Als konzentrationserhöhende Zusatzstoffe eignen sich folgende Substanzen oder deren Mischungen:

1. Mit Wasser mischbare organische Lösungsmittel, die zu keiner Hydrolyse des Reaktivfarbstoffs der Formel (1) führen, wie Ester und Amide, beispielsweise 2-Oxo-1,3-dioxalan oder ε-Caprolactam.

2. Hydrotrope Substanzen wie Harnstoff und seine Derivate und/oder Schwefelsäureester von Aminoalkoholen, beispielsweise Schwefelsäuremono-(2-aminoethylester).

3. Anionische oder nichtionische Tenside, wobei als besonders bevorzugt Kondensationsprodukte aus aromatischen Sulfonsäuren und Formaldehyd, Ligninsulfonate oder Polyvinylpyrrolidone hervorzuheben sind.

4. Ammoniumsalze, bevorzugt Ammoniumsulfat.

Als Puffer kommen für die erfindungsgemäßen flüssigkristallinen Phasen für Reaktivfarbstoffe übliche

Puffergemische (für pH-Bereich 6 - 8), wie beispielsweise Phosphatpuffer in Frage.

Das eingesetzte salzarme Konzentrat, das sich besonders für höher konzentrierte Einstellungen eignet, wird bevorzugt in der Weise hergestellt, daß eine verdünnte salzhaltige Lösung des Reaktivfarbstoffs der Druckpermeation unterworfen wird.

Die lyotrope flüssigkristalline Phase der Farbstoffe in Wasser enthält 10 - 25 % Gew. Farbstoff, bevorzugt 15 - 20 Gew.-% Farbstoff 0 - 2 Gew.-% Puffersubstanz (für pH 6 - 8), bevorzugt 0,5 % Gew. Puffersubstanz, und für Phasen mit hoher Farbstoffkonzentration bis zu 25 Gew.-% (bevorzugt 8 - 25 Gew.-%) des konzentrationserhöhenden Zusatzstoffes.

Die auf diese Weise hergestellte Flüssigformierung zeichnet sich durch eine sehr gute Lager- und Hydrolysenstabilität aus. Der Farbstoffe (I) ist z.B. in der DE-A-2906191 beschrieben Gegenstand der EP-A- 029 959 ist die lyotrope flüssigkristalline wäßrige Phase des in Wasser bei Raumtemperatur in einer Konzentration von 12 - 35 % vorliegenden Farbstoffes der Formel

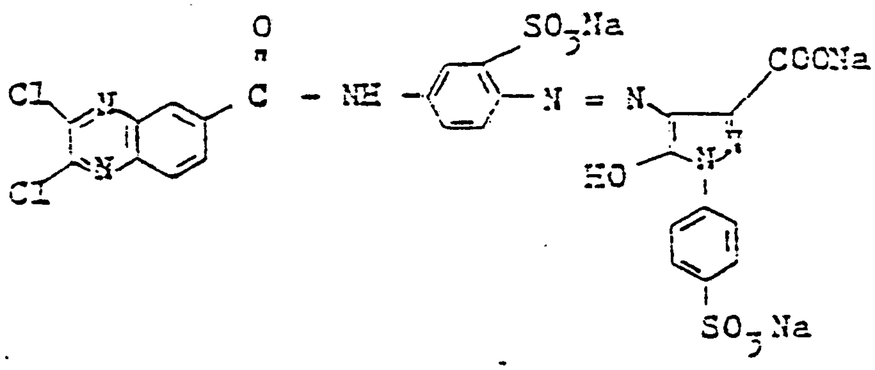

sowie die Verwendung dieser lyotropen flüssigen Krisalle zur Herstellung von Färbebädern und Druckpasten für das Färben und/oder Bedrucken von natürlichen und synthetischen Substraten insbesondere Baumwolle, Wolle, Regeneratcellulose Papier und Leder.

**Beispiel 1**

In 80 g einer nahezu salzfreien wäßrigen Einstellung, die 9 % des Farbstoffs der Formel (I) enthält, (wobei M⊕ = Na⊕) werden bei 50° C unter Rühren zusätzlich 8 g trockener salzhaltiger Farbstoff (I), 11,5 g Ammoniumsulfat und 0,5 g Dikaliumhydrogenphosphat eingetragen.

Man erhält eine lyotrope flüssigkristalline Phase des Farbstoffs IV in Wasser, die gute Lager- und Hydrolysenbeständigkeit aufweist, und die charakteristische Interferenzfarben beim Einbringen zwischen gekreuzte Nicols im Polaristationsmikroskop zeigt. Nach Einrühren dieser Formierung in Wasser unter Zusatz der für die Reaktivfärberei üblichen Hilfsmittel erhält man eine Farblösung zum Färben von natürlichen und regenerierten Cellulosefasern in rotstichig, gelben Tönen.

**Beispiel 2**

In 100 g einer nahezu salzfreien wäßrigen Einstellung, die 28 g des Farbstoffs der Formel (II) enthält, (wobei M⊕ = Na⊕) werden unter Rühren 10 g Polyvinylpyrrolidon mit einer mittleren Molmasse von 40 000 und 10 g Ammoniumsulfat eingetragen. Man erhält eine lyotrope flüssigkristalline Phase des Farbstoffs der Formel (II) in Wasser, die beim Einbringen zwischen gekreuzte Nicols im Polarisationsmikroskop die charakteristischen Interferenzfarben zeigt. Unter Zusatz der für den Reaktivdruck üblichen Hilfsmittel erhält man eine Farbstoffpräparation zum gedrucken von natürlichen und regenerierten Cellulosefasern in rotstichig gelben Tönen.

**Patentansprüche**

1. Lyotrope flüssigkristalline, wässrige Phase eines in Wasser bei Raumtemperatur in einer Konzentration von 10 - 25 % gegebenenfalls in Gegenwart von konzentrationserhöhenden Zusatzstoffen und/oder gegebenenfalls in Gegenwart von Puffersubstanzen vorliegenden Reaktivfarbstoffs der Formel

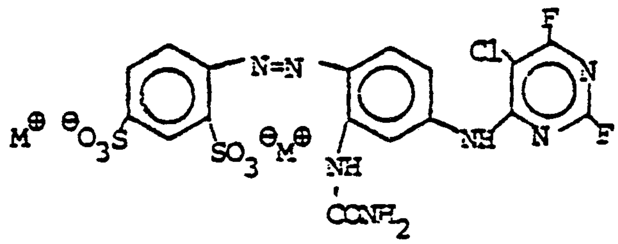

(I)

oder der Formel

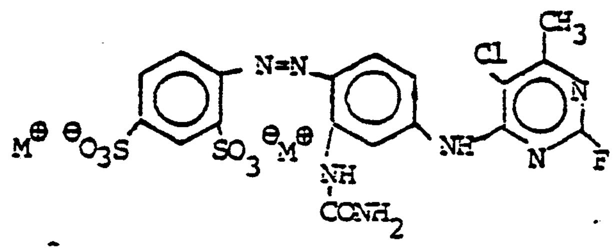

(II)

(I) wobei M⊕ = H⊕ oder Alkalimetallkation ist.

2.Verwendung der lyotropen flüssigkristallinen Phasee gemäß Anspruch 1 zur Herstellung von Färbebädern und Druckpasten für das Färben und/oder Bedruckpasten von natürlichen und synthetischen Substraten, insbesondere Baumwolle, Wolle, Regeneratcellulose, Papier und Leder.

**Revendications**

1. Phase aqueuse, mésomorphe, lyotrope d'un colorant réactif de formule

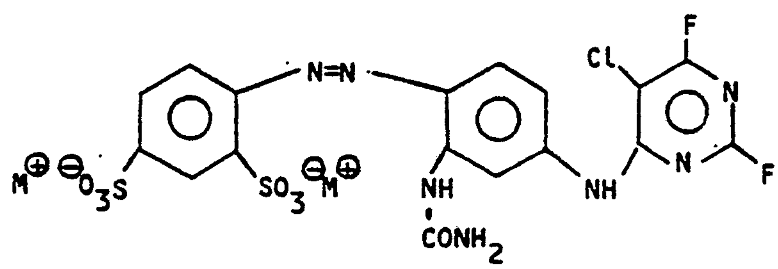

(I)

ou de formule

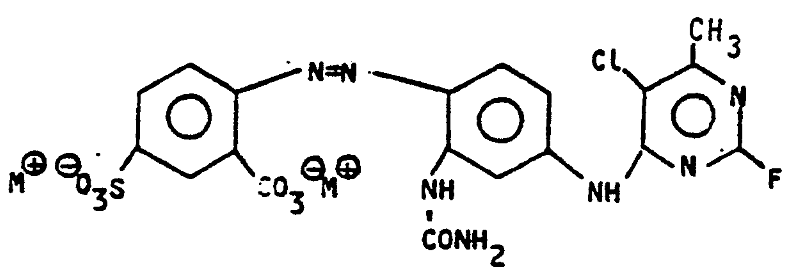

(II)

dans laquelle M est H ou un cation de métal alcalin, présent à une concentration de 10-25 % dans l'eau à la température ambiante, éventuellement en présence d'additifs élevant la concentration et/ou éventuellement en présence de substances-tampons.

2. Utilisation de la phase mésomorphe lyotrope selon la revendication 1 pour la fabrication de bains de teinture et pâtes d'impression pour la teinture et/ou L'impression de substrats naturels et synthetiques, en particulier le coton, la laine, la cellulose régénérée, le papier et le cuir.

**Claims**

1. Lyotropic liquid-crystalline aqueous phase of a reactive dyestuff of the formula

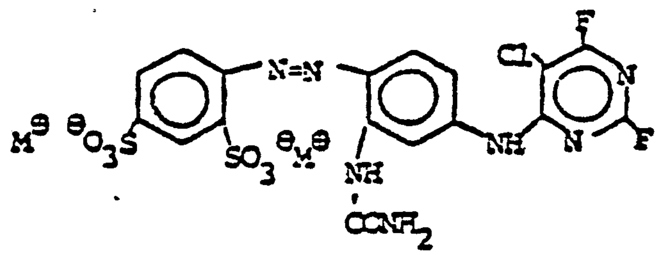

(I)

or of the formula

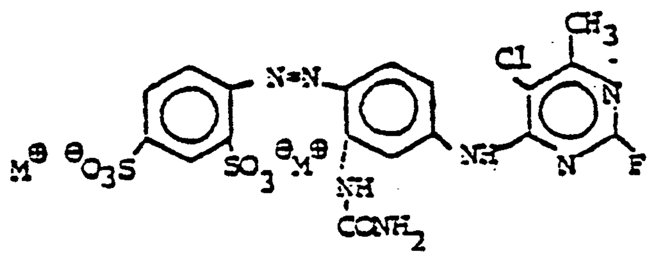

(II)

wherein

$M^{\oplus} = H^{\oplus}$ or an alkali metal catio

present in water at room temperatur in a concentration of 10-25%, if appropriate in the presence of concentrationincreasing additives and/or if appropriate in the presence of buffer substances.

2. Use of the lyotropic liquid-crystalline phase according to Claim 1, for preparing dyebaths and print pastes for the dying and/or printing of natural and synthetic substrates, in particular cotton, wool, regenerated cellulose, paper and leather.